Europäisches Patentamt

European Patent Office

Office européen des brevets

(11) Veröffentlichungsnummer: **0 308 804 B1**

(12) **EUROPÄISCHE PATENTSCHRIFT**

(45) Veröffentlichungstag der Patentschrift: **22.07.92**

(21) Anmeldenummer: **88115063.5**

(22) Anmeldetag: **15.09.88**

(51) Int. Cl.5: **F16F 9/46**, B60G 17/08

(54) **Regelbarer Schwingungsdämpfer.**

(30) Priorität: **17.09.87 DE 3731228**

(43) Veröffentlichungstag der Anmeldung:
**29.03.89 Patentblatt 89/13**

(45) Bekanntmachung des Hinweises auf die
Patenterteilung:
**22.07.92 Patentblatt 92/30**

(84) Benannte Vertragsstaaten:
**ES**

(56) Entgegenhaltungen:
EP-A- 0 139 144          WO-A-85/04698
FR-A- 2 588 343          FR-A- 2 597 563
GB-A- 2 186 947          US-A- 4 333 668

PATENT ABSTRACTS OF JAPAN, Band 11,
Nr. 356 (M-644)[2803], 20. November 1987; &
JP-A-62 134 312 (HITACHI LTD) 17-06-1987

PATENT ABSTRACTS OF JAPAN, Band 9, Nr.
272 (M-425)[1995], 30. Okfober 1985; & JP-
A-60 116 936 (KAYABA KOGYO K.K.) 24-06-85

(73) Patentinhaber: **ALFRED TEVES GMBH
Guerickestrasse 7
W-6000 Frankfurt/Main 90(DE)**

(72) Erfinder: **Klein, Hans-Christof
Hofheimer Strasse 22
W-6234 Hattersheim(DE)**
Erfinder: **Lohberg, Peter
Am Ringelsberg 7
W-6382 Friedrichsdorf(DE)**

(74) Vertreter: **Grau, Ulf
c/o ALFRED TEVES GMBH Guerickestrasse 7
W-6000 Frankfurt (M) 90(DE)**

## Beschreibung

Die Erfindung bezieht sich auf einen regelbaren Schwingungsdämpfer für Kraftfahrzeuge mit regelbaren Bremsvorgängen (Antiblockiersystem bzw. Anfahrschlupfregelung).

Schwingungsdämpfer mit verstellbarer Charakteristik sind bekannt. Der Mechanismus der Dämpfungskraftverstellung beruht darauf, daß die Durchströmöffnungen für Zug- und Druckrichtung bzw. eine dieser Richtungen verändert wird. Nach dem Stand der Technik ist es üblich, zu diesem Zweck einen festgelegten Satz von Blenden oder Drosseln verfügbar zu haben, aus dem eine bzw. eine bestimmte Kombination im Bedarfsfall ausgewählt und eingeschaltet wird. Hierbei sind verschiedene Ausführungen realisiert worden.

Eine Realisierung beruht im Prinzip darauf, daß eine Lochscheibe elektromotorisch verdreht wird, wobei Durchströmöffnungen unterschiedlichen Strömungswiderstandes ausgewählt werden. Die Anzahl unterschiedlicher Öffnungen entspricht dabei direkt der Anzahl unterschiedlicher diskreter Dämpferstufen.

Ein anderes Prinzip beruht darauf, daß nichtschaltbare, permanent wirksame Durchströmöffnungen vorhanden sind, denen zum Zweck der Verstellung der Dämpfungskraft weitere Durchströmwiderstände parallelgeschaltet werden. Der sich ergebende jeweilige Gesamtströmungswiderstand bestimmt dann die Dämpfungswirkung. Die Anzahl der möglichen Kombinationen von Gesamtwiderständen bestimmt die Anzahl der möglichen Dämpferstufen.

Ein nach diesem Prinzip arbeitender Schwingungsdämpfer ist aus der europäischen Patentanmeldung EP-A-0 139 144 bekannt. Der bekannte regelbare Schwingungsdämpfer für Kraftfahrzeuge weist einen in einem Dämpferrohr axial verschiebbaren und dicht geführten Dämpferkolben, der das mit einem Dämpfungsmedium gefüllte Dämpferrohr in zwei Arbeitskammern unterteilt, wobei die Verbindung zwischen den beiden Arbeitskammern durch mindestens ein ungeregeltes erstes Ventil und mindestens ein steuerbares zweites Ventil gebildet ist, die zueinander hydraulisch parallel wirkend angeordnet sind. Zur Einstellung der Dämpferhärte wird das steuerbare Ventil in Abhängigkeit von getakteten Steuersignalen in schneller Folge periodisch geöffnet und geschlossen.

Aus dem Dokument JP-A-62-134312 ist ein anderer regelbarer Schwingungsdämpfer für Kraftfahrzeuge bekannt, bei dem zur Einstellung der Dämpferhärte ein steuerbares Solenoidventil in Abhängigkeit von getakteten elektrischen Steuersignalen in schneller Folge periodisch öffnet und schließt.

Die Verstellgeschwindigkeiten zwischen den einzelnen Stufen sind unterschiedlich, je nach Verstellprinzip. Ventilreaktionszeiten im Bereich von 10 ms werden im Rahmen dieser Ausführungen als "schnell" bezeichnet im Gegensatz zu anderen Verstellmachanismen, deren Reaktionszeit im Bereich von 50 ms bis zu einigen Sekunden liegt, und die hier als "langsam" eingestuft werden.

Weiterhin existieren System-Ausführungsformen, bei denen per Schalter zwischen unterschiedlichen Komfortstufen (z.B. "sportlich-hart" "normal", "weich" etc.) gewählt werden kann. Es existieren andere System-Ausführungsformen, bei denen nach Maßgabe bestimmter Geschwindigkeits- und Beschleunigungsschwellen diese Bereichsumschaltung automatisch erfolgt. Letztere werden als "geregelte Dämpfer" bezeichnet. Zur Reaktion auf Geschwindigkeitsgrenzen genügen langsame Aktuatoren. Zur Reaktion auf Schlagstöße, kurzzeitige hohe Beschleunigungen, sind schnelle Aktuatoren erforderlich.

Der Vorteil gechwindigkeitsabhängiger langsamer Regelungen kann nur in einer Steigerung des Fahrkomforts gesehen werden.

Der Vorteil schneller geregelter Dämpfer besteht in der Möglichkeit, den Fahrkomfort auf ein Maximum zu steigern und im Augenblick der Erfordernis kurzzeitig auf maximale Fahrsicherheit umzuschalten.

Alle bisherigen technischen Lösungen ermöglichen aufgrund der groben Stufung gegenwärtig lediglich das Ansteuern von Arbeitspunkten auf einer begrenzten Anzahl festgelegter Kennlinien innerhalb der Ebene des möglichen Nutzungsbereichs. Das heißt keines der Konzepte genügt der Notwendigkeit, auf ein sensorisch ausreichend aufgelöstes Beschleunigungssignal auch entsprechend fein dosiert reagieren zu können. Eine hohe Auflösung wäre jedoch technisch wünschenswert, um auf die Dämpfungsanforderungen zur Gewährleistung der Fahrsicherheit feinfühlig reagieren zu können. Stellt man die Belange des Komforts in den Vordergrund, so hat die Praxis gezeigt, daß der ungeschulte Benutzer nicht in der Lage ist, mehr als drei Härtestufen zu unterscheiden. Zumeist spürt er sogar nur den Komfortunterschied zwischen "ganz hart" und "ganz weich". Versuche mit schnellen geregelten Dämpfern haben außerdem gezeigt, daß das Dämpfungssystem zu ca. 90% der Fahrzeit automatisch in der "Komfortstufe" verbleibt und zu ca. 10% auf "Sicherheit" umschaltet. Hierbei ist bemerkenswert, daß die mittleren Stufen nur sehr kurzfristig, gewissermaßen als Übergangsstufen benötigt werden. (Dies gilt natürlich nur für Normal-Geschwindigkeitsbereiche; bei hohen Geschwindigkeiten wird die "harte" Dämpfung aus Sicherheitsgründen erzwungen!)

Der Erfindung liegt daher die Aufgabe zugrunde, einen regelbaren Schwingungsdämpfer für Fahrzeuge mit geregelten Bremsvorgängen zu schaffen, mit dem die wirksame Dämpfungskraft in weiten Bereichen kontinuierlich geregelt und dessen Verhalten an die Regelvorgänge angepaßt werden kann.

Diese Aufgabe wird erfindungsgemäß durch einen regelbaren Schwingugsdämpfer mit einem in einem Dämpferrohr axial verschiebbar und gedichtet geführten Dämpferkolben, der das mit einem Dämpfungsmedium gefüllte Dämpferrohr in zwei Arbeitskammern unterteilt, wobei die Verbindung zwischen den beiden Arbeitskammern durch mindestens ein ungeregeltes erstes Ventil und mindestens ein steuerbares zweites Ventil gebildet ist, die zueinander hydraulisch parallel wirkend angeordnet sind, wobei zur Einstellung einer Dämpferhärte das steuerbare Ventil in Abhängigkeit von getakteten Steuersignalen in schneller Folge periodisch öffnet und schließt und das steuerbare Ventil durch den ABS-Rechner angesteuert wird, wobei die elektrischen Zeitkonstanten der ABS/ASR-Steuerventile denen des steuerbaren Ventils entsprechen, gelöst.

Die nachstehend beschriebene Erfindung verbessert die Unzulänglichkeiten des gegenwärtigen Standes der Technik auf einfache und fortschrittliche Weise. Der Vorteil der Erfindung wird nicht nur in der möglichen Erhöhung des Fahrkomforts durch feinfühliges Verstellen der Dämpferhärte gesehen, sondern auch in den sich ergebenden Möglichkeiten der aktiven Erhöhung der Fahrsicherheit bei geregelten Bremsvorgängen (ABS). Während die elektronische Regelung bislang Fahrzeugstabilität und im zeitlichen Mittel verbesserte Haftwertausnutzung bewirkt, kann nun durch den Einsatz erfindungsgemäß geregelter Schwingungsdämpfer zusätzlich der zeitliche Mittelwert der Normalkraft (Radaufstandskraft) erhöht werden. Dies gilt auch für Belange von ASR-Vorgängen. Mit Hilfe zusätzlicher Beschleunigungssensoren und den durch die ABS/ASR-Elektronik ermittelten Schlupfkenngrößen, können zusätzliche Stellsignale für die Schwingungsdämpfer berechnet werden, die eine dem erkannten Haftwert der Straße (Asphalt, Eis etc.) angepaßte Modulation der Schwingungsdämpferhärte bewirken.

Der Grundgedanke der Erfindung besteht darin, für Zug- und/oder Druckstufe nur eine einzige gesteuerte Summen-Durchströmöffnung zu verwenden; diese aber permanent in schneller Folge AUF/ZU zu schalten. Die kontinuierlich veränderbare Dämpferkraft wird dann entweder dadurch erreicht, daß bei konstanten Wechselfrequenz das Taktverhältnis zwischen Ventilöffnungszeit und Ventilschließzeit verändert wird oder aber bei festeingestelltem Taktverhältnis die Frequenz variiert wird. Der technische Realisierungsaufwand dieses Lösungsprinzips ist denkbar gering; die erzielbare Auflösung ist um ein Vielfaches höher, als durch den gegenwärtigen Stand der Technik bisher erreicht wurde.

Die Erfindung ist anwendbar auf Schwingungsdämpfertypen jeglicher Art und hierbei wiederum auf damit verbundene Steuerventile jeder Bauform. Es ist bei der Auswahl der Steuerventile lediglich darauf zu achten, daß die elektrischen und hydraulischen Zeitkonstanten der Dämpferventile denjenigen Zeitkonstanten der ABS/ASR-Steuerventile in Bezug auf die Schaltgeschwindigkeit (Millisekundenbereich) entsprechen. Zur Erreichung dieses Ziels ist es durchaus im Sinne der Erfindung, den zu schaltenden Summenquerschnitt aus synchron geschalteten Teilquerschnitten zusammenzusetzen.

Erfindungsgemäß erfolgt die Modulation der Dämpfungswirkung über eine Modulation der mittleren Ventilöffnungszeit. Technisch läßt sich dieser Vorgang als Linearbewegung oder Rotationsbewegung verwirklichen. Im Falle der Linearbewegung wird das Magnetwerk z.B. einen federbelasteten Schieber von einer Durchtrittsöffnung hin- und herbewegen. Die Ventilöffnungszeit entspricht dann dem Zeitraum, in dem der Schieber oder die Schieberöffnungen den Durchströmkanal freigeben. Im Fall der Rotationsbewegung wird ein motorgetriebener umlaufender federbelasteter Radialschieber je nach Größe der Fliehkraft eine Durchströmöffnung im zeitlichen Mittel mehr oder weniger freigeben.

Die Funktion und weitere erfindungswesentlichen Vorteile ergeben sich aus der nachstehenden Beschreibung eines Ausführungsbeispiels der Erfindung anhand der Zeichnung. Hierzu zeigt:

Fig. 1      schematisch den Aufbau eines erfindungsgemäßen Schwingungsdämpfers

Fig. 2      ein Diagramm der Dämpfungskraft in Abhängigkeit von der Kolbengeschwindigkeit

Fig. 3      ein Anwendungsbeispiel erfindungsgemäßer regelbarer Schwingungsdämpfer im Zusammenhang mit einem ABS/ASR-System.

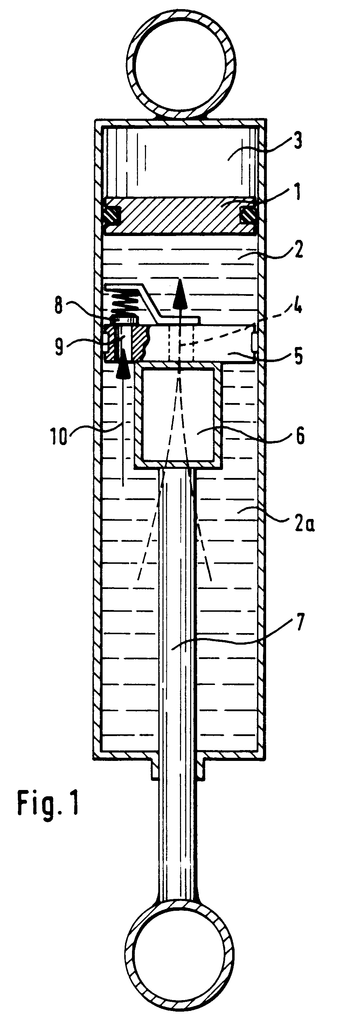

Fig. 1 zeigt, stark schematisiert, einen modifizierten Einrohrdämpfer nach dem Prinzip von de Carbon. Dargestellt sind nur die Elemente zum Betrieb in Zugrichtung, um die Übersichtlichkeit zu bewahren. Die Steuerung des Bypass-Stromes hat für beide Richtungen Gültigkeit. Für die Druckrichtung ist jedoch ein weiteres (nicht dargestelltes) ungeregeltes Ventil wirksam. Der Trennkolben 1 separiert Arbeitsraum 2 und Gasraum 3 in bekannter Weise. Der Dämpfungskolben 5 ist mit der Kolbenstange 7 über einen Block verbunden, in dem sich ein steuerbares Ventil 6 zum Betrieb nach erfindungsgemäßer Art befindet. (Die elektrischen Zuleitungen sind nicht dargestellt). Wie durch den Pfeil 4 angedeutet, wird ein taktgesteuerter Bypass-Strom aus der unteren Arbeitskammer 2a durch das Steuerventil 6 und eine Bohrung im Dämpfungskolben 5 in die obere Arbeits- kammer 2 geleitet. Es ist ein ungeregeltes, passives Federventil 8 vorgesehen, das eine Kolbenbohrung 9 verschließt. Bei bestimmtem Druck öffnet dieses Ventil und läßt einen druckabhängigen Grundstrom, dargestellt durch Pfeil 10 passieren. Der Begriff Summendurchströmöffnung bezieht sich auf die Funktion des gesteuerten Ventils 6. Das Zusammenwirken der Ventile 6 und 8 ist nichtlinear gegenläufig und muß im Realisierungsfall durch Versuche abgeglichen werden. Die beiden Ventile 6 und 8 beeinflussen sich gegenseitig; mit steigendem Durchlaß des Steuerventils 6 (etwa parabelförmige progressive Kennlinie) nimmt die Öffnungswirkung des Federventils 8 (degressive Kennlinie) ab und umgekehrt.

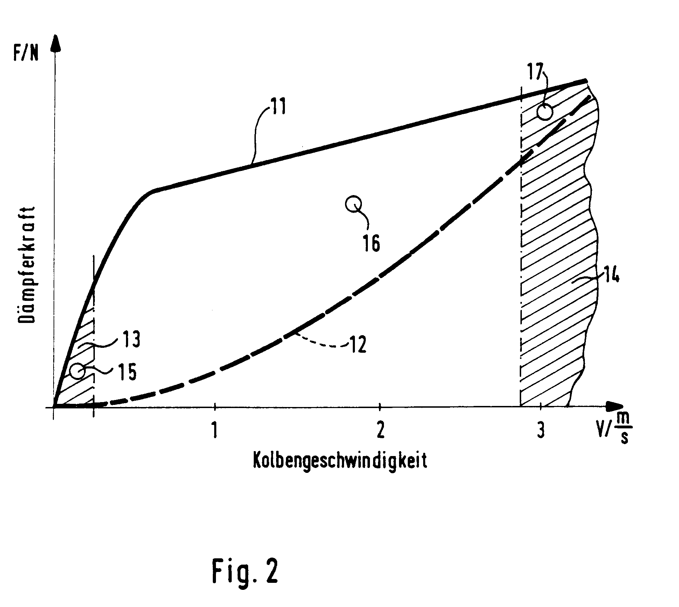

Fig. 2 zeigt den prinzipiellen Verlauf der beiden Kennlinien, dargestellt für die Zugstufe. Hierbei entspricht 11 der Kennlinie des Federventils 8 (bei geschlossenem Steuerventil 6) und 12 der Kennlinie des Steuerventils 6 (bei geschlossenem Federventil 8). Der schraffierte Kennlinienbereich 13 ist derjenige Kolbengeschwindigkeitsbereich, in dem nach praktischen Erfahrungen ca. 90% der Fahrzeit verweilt wird, und in dem man feinfühlig dosieren möchte. Ein erfindungsgemäß angesteuerter Arbeitspunkt 15 wird sich in der Regel irgendwo zwischen den beiden Grundkennlinien innerhalb dieses Bereiches bewegen.

Der schraffierte Kennlinienbereich 14 ist der nach praktischen Erfahrungen zweithäufigste Kolbengeschwindigkeitsbereich. Derartige Kolbengeschwindigkeiten werden durch Schlaglöcher etc. verursacht. Ein Arbeitspunkt 17 in diesem Bereich wäre dadurch zu erzeugen, daß das Steuerventil nahezu vollständig auf Stellung "geschlossen" getaktet wird. Hier wird ein weiterer Vorteil ersichtlich. Die Kennlinie 12 nähert sich mit zunehmender Kolbengeschwindigkeit der Kennlinie 11 an. Dadurch ist bei einer Betriebsstörung des Steuerventils 6 (ungünstiger Fall: permanent geöffnet) sichergestellt, daß stets eine mittelgroße resultierende Dämpferkraft erhalten bleibt. Schließlich ist ein Arbeitspunkt 16 dargestellt, wie er in der Praxis bei transienten Vorgängen kurzzeitig angesteuert werden könnte.

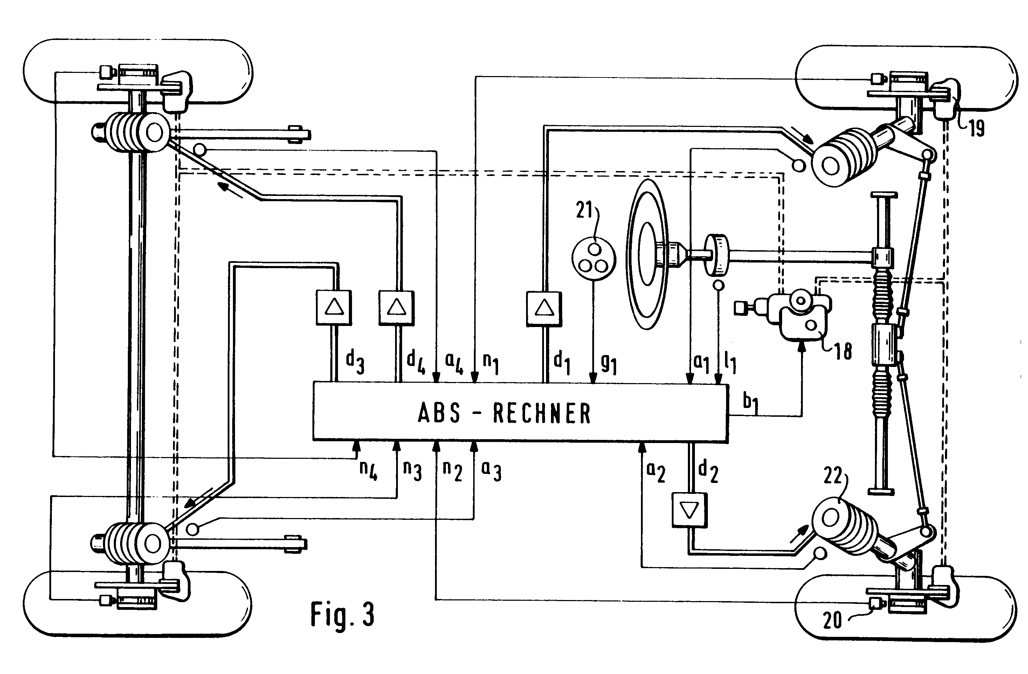

Fig. 3 zeigt eine erfindungsgemäße Anwendung zur Unterstützung von ABS/ASR-Vorgängen. Hierbei empfängt der ABS-Rechner sensorische Signale von den vier Radsensoren 20 (Raddrehzahlen n1,n2,n3,n4) und bildet daraus Steuersignale b1 zur Ansteuerung des Bremsaggregates 18, das entsprechend die Bremsen 19 in bekannter Weise. Es sind weitere Sensoren vorhanden, die Bewegungsgrößen (Stellung und/oder Geschwindigkeit und/oder Beschleunigung) zwischen Rad und Chassis messen und entsprechende Signale al,a2,a3,a4 an den ABS-Rechner senden. Aus diesen Bewegungsgrößen und den ABS-Parametern berechnet der ABS-Rechner Steuerdaten respektive Steuersignale zur Regelung der Dämpfer 22 nach erfindungsgemäßen Verfahren. Es ist vorteilhaft und u.U. erforderlich zusätzlich einen Gierbeschleunigungs-Sensor 21 (Signal g1) einzusetzen bzw. zusätzlich den Lenkwinkel zu sensieren (Signal 11).

Die Bremskraft berechnet sich aus dem Produkt der Radaufstandskraft und dem Reibwert zwischen Straße und Reifen. Die ABS-Funktion im klassischen Sinne optimiert die Reibwertausnutzung. Das Steuerprogramm zur Ausnutzung der steuerbaren Schwingungsdämpfer 22 als Bestandteil der ABS/ASR-Funktionen ist erfindungsgemäß so aufgebaut, daß daß zusätzlich der zeitliche Mittelwert der Radaufstandskräfte optimiert wird, in Abhängigkeit von der Größe des durch ABS ermittelten ausnutzbaren Reibwertes.

**Patentansprüche**

1. Regelbarer Schwingungsdämpfer in einem Kraftfahrzeug mit durch einen ABS-Rechner geregelten Bremsvorgängen (Antiblockiersystem bzw. Anfahrschlupfregelung), mit einem in einem Dämpferrohr axial verschiebbar und gedichtet geführten Dämpferkolben (5), der das mit einem Dämpfungsmedium gefüllte Dämpferrohr in zwei Arbeitskammern (2,2a) unterteilt, wobei die Verbindung zwischen den beiden Arbeitskammern (2,2a) durch mindestens ein ungeregeltes erstes Ventil (8) und mindestens ein steuerbares zweites Ventil (6) gebildet ist, die zueinander hydraulisch parallel wirkend angeordnet sind, wobei zur Einstellung einer Dämpferhärte das steuerbare Ventil (6) in Abhängigkeit von getakteten Steuersignalen in schneller Folge periodisch öffnet und schließt und das steuerbare Ventil (6) durch den ABS-Rechner angesteuert wird, wobei die elektrischen Zeitkonstanten der ABS/ASR-Steuerventile denen des steuerbaren Ventils (6) entsprechen.

2. Regelbarer Schwingungsdämpfer nach Anspruch 1, dadurch **gekennzeichnet**, daß bei konstanter Wechselfrequenz der Steuersignale das Verhältnis von Ventilöffnungszeit zu Ventilschließzeit verändert wird.

3. Regelbarer Schwingungsdämpfer nach Anspruch 1, dadurch **gekennzeichnet**, daß bei festem Verhältnis von Ventilöffnungszeit zu Ventilschließzeit die Signalfrequenz verändert wird.

4. Regelbarer Schwingungsdämpfer nach einem oder mehreren der vorhergehenden Ansprüche, dadurch **gekennzeichnet**, daß der vom gesteuerten Ventil (6) zu schaltende Durchströmungsquerschnitt aus synchron geschalteten Teilquerschnitten gebildet ist.

5. Regelbarer Schwingungsdämpfer nach einem oder mehreren der vorhergehenden Ansprüche, dadurch **gekennzeichnet**, daß zwei ungeregelte Ventile (8) mit einem steuerbaren Ventil zusammenwirken, wobei ein ungeregeltes Ventil in Druckrichtung und das andere ungeregelte Ventil in Zugrichtung wirksam ist.

6. Regelbarer Schwingungsdämpfer nach Anspruch 5, dadurch **gekennzeichnet**, daß die beiden ungeregelten Ventile unterschiedliche Kennlinien besitzen.

7. Regelbarer Schwingungsdämpfer nach einem oder mehreren der vorhergehenden Ansprüche, dadurch **gekennzeichnet**, daß das oder die ungeregelten Ventile (8) eine degressive Kennlinie Dämpferkraft = f (Kolbengeschwindigkeit) besitzen und das Steuerventil eine progressive, etwa parabelförmige Kennlinie besitzt.

8. Dämpfungssystem mit regelbaren Schwingungsdämpfern nach einem oder mehreren der vorhergehenden Ansprüche, dadurch **gekennzeichnet**, daß die Steuersignale zur kontinuierlichen Veränderung der Dämpferkräfte nach sensierten Bewegungsgrößen (z.B. Stellung und/oder Geschwindigkeit und/oder Beschleunigung zwischen Rad und Chassis) und/oder ABS/ASR-Rechendaten durch den ABS/ASR-Rechner generiert werden.

## Claims

1. A controllable vibration damper in an automotive vehicle with braking operations controlled by an ABS-processor (anti-lock system and traction slip control system, respectively), having a damping piston (5) which is axially slidably and sealedly guided in a damping tube and which subdivides the damping tube filled with a damping medium into two working chambers (2, 2a), the connection between the two working chambers (2, 2a) being established by at least one uncontrolled first valve (8) and at least one controllable second valve (6), which valves are arranged acting hydraulically in parallel in respect of one another, wherein, for the adjustment of damping hardness, the controllable valve (6) opens and closes periodically in rapid succession in response to pulsed control signals, and wherein the controllable valve (6) is actuated by the ABS-processor, the electric time constants of the anti-lock/traction-slip control signals corresponding to those of the controllable valve (6).

2. A controllable vibration damper as claimed in claim 1, **characterized** in that, at a constant change-over frequency of the control signals, the ratio of valve-opening time to valve-closing time is changed.

3. A controllable vibration damper as claimed in claim 1, **characterized** in that, at a constant ratio of valve-opening time to valve-closing time, the signal frequency is changed.

4. A controllable vibration damper as claimed in any one or more of the preceding claims, **characterized** in that the flow passage cross-section to be activated by the controlled valve (6) is formed of synchronously activated partial cross-sections.

5. A controllable vibration damper as claimed in any one or more of the preceding claims, **characterized** in that two uncontrolled valves (8) cooperate with one controllable valve, one uncontrolled valve thereof being effective in the direction of compressive motion, while the other uncontrolled valve is effective in the direction of trajectory motion.

6. A controllable vibration damper as claimed in claim 5, **characterized** in that the two uncontrolled valves have different characteristic curves.

7. A controllable vibration damper as claimed in any one or more of the preceding claims, **characterized** in that the uncontrolled valve or valves (8) has or have a degressive characteristic curve damping force = f (piston speed), and the control valve has a progressive, roughly parabolic characteristic curve.

8. A damping system with controllable vibration dampers as claimed in any one or more of the preceding claims, **characterized** in that the control signals for continuously varying the damping forces are generated by the ABS/TCS-processor on the basis of sensed quantities of motion (e.g. position and/or speed and/or acceleration between wheel and chassis) and/or anti-lock/traction slip control calculated data.

## Revendications

1. Amortisseur de vibrations régulable, pour un véhicule automobile dont le circuit de freinage est régulé au moyen d'un ordinateur antiblocage (régulation du glissement de freinage et/ou de traction), comprenant un piston d'amortisseur (5) qui est guidé de manière à coulisser axialement et de façon étanche dans un tube d'amortisseur et qui divise le tube d'amortisseur rempli d'agent amortisseur en deux chambres de travail (2, 2a), la liaison entre les deux chambres de travail (2, 2a) étant assurée par au moins une première valve (8) non régulée et au moins une seconde valve manoeuvrable (6), ces valves étant implantées pour agir hydrauliquement, en parallèle l'une à l'autre, et dans lequel, pour réguler la dureté d'amortissement, la valve manoeuvrable (6) est périodiquement ouverte et fermée, selon une succession rapide, en fonction de signaux de commande synchrones, et dans lequel la valve manoeuvrable (6) est commandée par l'ordinateur antiblocage de manière que les constantes de temps électriques des valves de commande de la régulation de glissement de freinage et/ou de traction ABS/ASR correspondent à celle de la valve manoeuvrable (6).

2. Amortisseur de vibrations régulable conforme à la revendication 1, caractérisé en ce que, à une fréquence de commutation constante des signaux de commande, le rapport entre le temps d'ouverture de valve et le temps de fermeture de valve est modifié.

3. Amortisseur de vibrations régulable conforme à la revendication 1, caractérisé en ce que, à un rapport constant entre le temps d'ouverture de valve et le temps de fermeture de valve, la fréquence du signal est modifiée.

4. Amortisseur de vibrations régulable conforme à l'une quelconque des revendications précédentes, caractérisé on ce que la section transversale d'écoulement à actionner par la valve commandée (6) est formée de sections transversales partielles activées de façon synchrone.

5. Amortisseur de vibrations régulable conforme à l'une quelconque des revendications précédentes caractérisé en ce que deux valves non régulées (8) coopère avec une seule valve manoeuvrable, l'une des valves non régulées agissant dans le sens de compression tandis que l'autre valve non régulée agit dans le sens de rebond.

6. Amortisseur de vibrations régulable conforme à la revendication 5, caractérisé en ce que les deux valves non régulées ont des courbes caractéristiques différentes.

7. Amortisseur de vibrations régulable conforme à l'une quelconque des revendications précédentes, caractérisé en ce que la ou les valves non régulées (8) ont une courbe caractéristique dégressive - force d'amortissement = f (vitesse du piston) - et la valve de commande a une courbe caractéristique progressive sensiblement parabolique.

8. Système d'amortissement à amortisseurs de vibrations régulables conforme à l'une quelconque des revendications précédentes, caractérisé en ce que les signaux de commande destinés à faire varier en continu les forces d'amortissement sont produits par l'ordinateur de régulation du glissement de traction/antiblocage sur la base des grandeurs de déplacement détectées (ex. position et/ou vitesse et/ou accélération entre roues et châssis) et/ou de données calculées de régulation du glissement de traction/antiblocage.

Fig. 1

Fig. 2

Fig. 3

ABS - RECHNER